# EUROPEAN PATENT SPECIFICATION

(11) **EP 3 780 296 B1**
(45) Date of publication and mention of the grant of the patent: **03.05.2023**
(21) Application number: 19785905.1
(22) Date of filing: 18.03.2019
(51) Int. Cl.: H01R 27/02, H01R 12/71, B60R 16/02, B60K 35/00, B60R 11/00, B60R 11/02, H01R 35/02

(54) **DISPLAY TERMINAL FOR VEHICLE AND VEHICLE**
ANZEIGEENDGERÄT FÜR FAHRZEUG UND FAHRZEUG
TERMINAL D'AFFICHAGE POUR VÉHICULE ET VÉHICULE

(30) Priority: 13.04.2018 CN 201820531609 U; 13.04.2018 CN 201810332891
(43) Date of publication of application: 17.02.2021
(73) Proprietor: BYD Company Limited, Guangdong 518118 (CN)
(72) Inventor: SU, Kai, Shenzhen, Guangdong 518118 (CN); ZHANG, Xiangyang, Shenzhen, Guangdong 518118 (CN); WANG, Ding, Shenzhen, Guangdong 518118 (CN); PENG, Li, Shenzhen, Guangdong 518118 (CN)
(74) Representative: DehnsGermany Partnerschaft von Patentanwälten
(86) International application number: PCT/CN2019/078512
(87) International publication number: WO 2019/196599

(56) References cited:
- CN-A- 102 668 270
- CN-U- 201 511 894
- CN-U- 203 277 815
- CN-U- 203 277 815
- CN-U- 203 580 814
- CN-U- 206 155 332
- CN-U- 208 522 207
- DE-C1- 10 013 938
- JP-A- 2013 113 694
- US-A1- 2017 133 811

## Description

### FIELD

The present invention relates to a display terminal configured to be mounted in a vehicle, and a vehicle having the display terminal.

### BACKGROUND

At present, most of the wiring harnesses for an electrical appliance in an automobile still are conventional connectors. There is a large quantity of wiring harnesses and there are various types, and space for arranging the wiring harnesses in the automobile is limited. Therefore, requirements for wiring in the vehicle are relatively high, which is not conducive to the wiring harness layout and also increases the weight of the automobile, which is not conducive to the lightweight requirement of the automobile, and improvement needs to be made.

JP 2013 113694 A discloses a vehicular meter unit comprising an image display monitor which forms a screen, and a meter ECU which performs meter-display of vehicle state information on the image display monitor. The image display monitor and the meter ECU are connected by connector terminals in a freely attachable/detachable manner.

CN 203277815 U discloses a vehicle-borne connector which comprises a male connector and a female connector. The male connector comprises a male shell, a male insulated rubber core arranged in the male shell, and a coaxial pin which is arranged in the male insulated rubber core and is used for transmitting a high speed signal. The female connector comprises a female shell, a female insulated rubber core arranged in the female shell, and a coaxial jack which is arranged in the female insulated rubber core and is matched with the coaxial pin. The female shell is sleeved with a screwed cap. The male shell is also provided with a flange for preventing the screwed cap from being separated from the female shell. The male shell is provided with an outer thread which is matched with the screwed cap. The female shell and the male shell are connected and fixed through the screwed cap.

CN 206155332 U discloses an on -vehicle rotating display device, including the display screen to and be connected the pencil for its transmission electric energy and signal with the display screen electricity, and still including actuating mechanism and rotary mechanism, rotary mechanism connects actuating mechanism and display screen, and actuating mechanism drive rotary mechanism drives display screen along display screen screen place plane rotation, and the inside passageway that holds the pencil and pass that is equipped with of rotary mechanism, pencil pass this passageway and are connected with the display screen electricity.

### SUMMARY

One aspect of the present invention provides a display terminal configured to be mounted in a vehicle, the display terminal comprising: a display screen; and an electrical connector mounted to the display screen and electrically connected to the display screen, the electrical connector being integrated with a plurality of wiring harness connecting positions, the plurality of wiring harness connecting positions being configured to transmit at least two different types of data and to be electrically connected to the vehicle, wherein the plurality of wiring harness connecting positions comprise an HSD wiring harness connecting position and a CAN wiring harness connecting position.

In embodiments, the electrical connector is connected between the display terminal and the vehicle, and a male connector and a female connector of the electrical connector are respectively connected to the display terminal and the vehicle. In addition, the electrical connector is integrated with an HSD line connector, an HSD line interface, a CAN line connector, and a CAN line interface, so that the electrical connector can achieve simultaneous transmission of a high-frequency signal and a low-frequency signal, thereby improving the practicability of the electrical connector, and effectively reducing the layout space of the electrical connector through matching of the male connector and the female connector.

Aspects of the invention also provide a vehicle with the aforementioned display terminal.

Additional aspects and advantages of the present invention will be given in the following description.

### BRIEF DESCRIPTION OF THE DRAWINGS

The foregoing and/or additional aspects and advantages of the present inventionwill become apparent and comprehensible from the following descriptions of the embodiments with reference to the accompanying drawings, where:
FIG. 1 is an exploded view of a display terminal according to an embodiment of the present invention.
FIG. 2 is a schematic structural diagram of a male connector of a display terminal according to an embodiment of the present invention.
FIG. 3 is a schematic structural diagram of a male connector of a display terminal from another perspective according to an embodiment of the present invention.
FIG. 4 is a schematic structural diagram of a female connector of a display terminal according to an embodiment of the present invention.
FIG. 5 is a schematic structural diagram of connection between a female connector of a display terminal and a wiring harness of a vehicle according to an embodiment of the present invention.
FIG. 6 is a schematic structural diagram of a male connector of a display terminal assembled to a main board according to an embodiment of the present invention.
FIG. 7 is a schematic structural diagram of a male connector of a display terminal from another perspective according to an embodiment of the present invention.
FIG. 8 is a schematic structural diagram of a male connector of a display terminal assembled to the display terminal according to an embodiment of the present invention.
FIG. 9 is a partial exploded view of a display terminal according to an embodiment of the present invention.
FIG. 10 is a schematic structural view of a vehicle according to an embodiment of the present invention.
FIG. 11 is a schematic structural diagram of a display terminal and a rotating mechanism according to an embodiment of the present invention.

### REFERENCE NUMERALS:

Vehicle 1000,
display terminal 100,
display panel 11, front housing 12, rear housing 13, avoiding hole 14, main board 15,
male connector 20, base 21, shielding ring 211, low-voltage differential signal connector 22, panoramic image connector 23, USB connector 24, CAN line connector 25, fastener 26, limiting rib 27, guide post 28, mounting pin 29,
female connector 30, base body 31, shielding post 311, low-voltage differential signal interface 32, panoramic image interface 33, USB interface 34, CAN line interface 35, fastening position 36, peripheral wall 37, guide groove 38, pin 39,
rotating mechanism 4, rotating shaft 41, hollow cavity 42,
wiring harness 200.

### DETAILED DESCRIPTION

The embodiments of the present invention are described below in detail. Examples of the embodiments are shown in the accompanying drawings, and same or similar reference signs in all the accompanying drawings indicate same or similar components or components having same or similar functions. The embodiments described below with reference to the accompanying drawings are exemplary, and are intended to explain the present invention and cannot be construed as a limitation to the present invention.

In the description of the present invention, it should be understood that, orientations or position relationships indicated by terms such as "center", "longitudinal", "transverse", "length", "width", "thickness", "up", "down", "front", "rear", "left", "right", "vertical", "horizontal", "top", "bottom", "inner", "outer", "clockwise", "counterclockwise", "axial", "radial", and "circumferential" are orientations or position relationships shown based on the accompanying drawings, and are used only for ease of describing the present invention and simplifying the description, rather than indicating or implying that the apparatus or element should have a particular orientation or be constructed and operated in a particular orientation, and therefore, should not be construed as a limitation on the present invention. In addition, a feature defined to be "first" or "second" may explicitly or implicitly include one or more features. In the description of the present invention, unless stated otherwise, the meaning of "a plurality of" is two or more than two.

The present invention provides a vehicle-mounted display terminal 100.

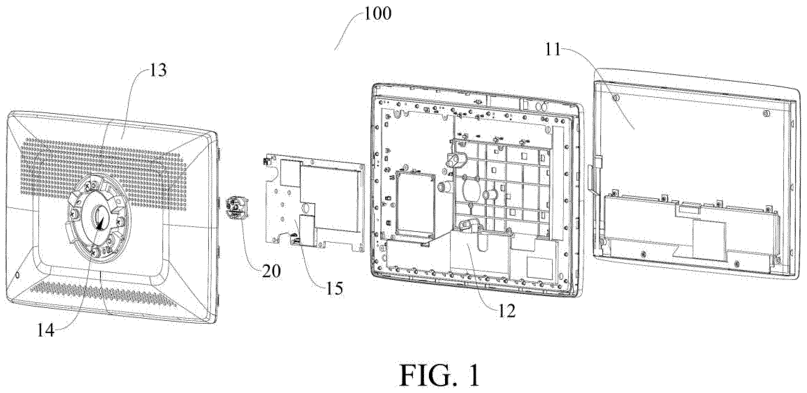

The vehicle-mounted display terminal 100 according to the embodiments of the present invention is described below with reference to FIG. 1 to FIG. 9.

As shown in FIG. 1 to FIG. 9, the vehicle-mounted display terminal 100 according to an embodiment of the present invention includes a display screen and an electrical connector.

The display screen is mounted to a vehicle body and may include a touch panel, a liquid crystal display, and the like. The display screen may be electrically connected to the electrical connector, so that when the display screen is in communication with a vehicle through the electrical connector, data and image display of the display screen can be achieved, or data information transmission between the display screen and the vehicle and an external device can be achieved, to facilitate use of passengers.

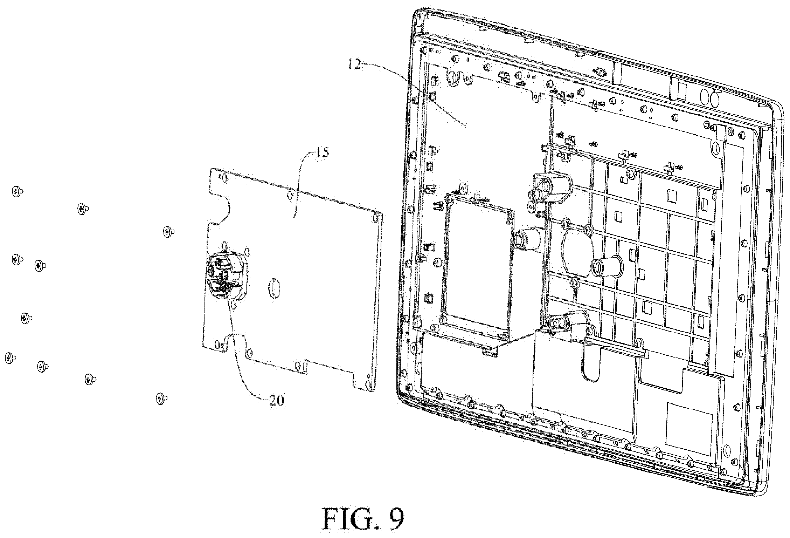

As shown in FIG. 1 and FIG. 9, the display screen includes a display panel 11, a housing, and a main board 15, where the housing includes a front housing 12 and a rear housing 13.

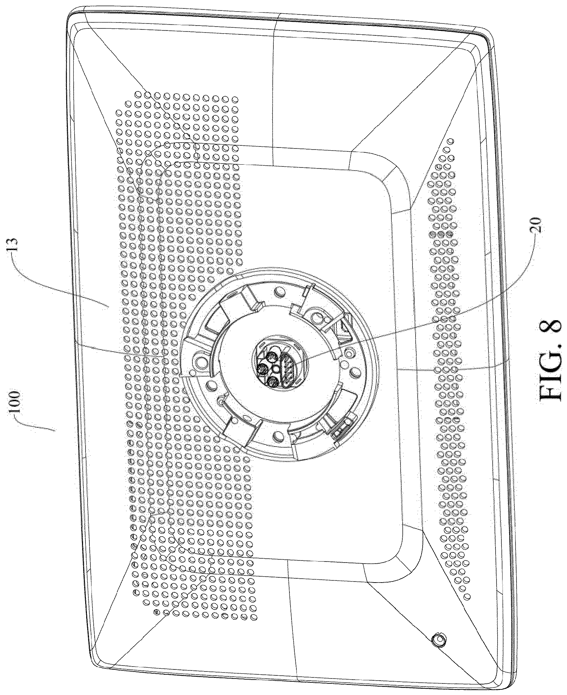

The display panel 11 and the main board 15 are mounted to the housing, the electrical connector is mounted to the main board 15, and the electrical connector is electrically connected to the main board 15. The display panel 11 is mounted to the front housing 12, for example, the display panel 11 is fixed to the front housing 12 through threaded fasteners, and a side of the display panel 11 displaying images faces the passenger, to facilitate use of the passenger in the vehicle. The main board 15 is mounted to the front housing 12 and mounted to one side of the front housing 12 away from the display panel 11. The main board 15 is connected to the electrical connector, and the rear housing 13 is connected to the front housing 12. For example, the rear housing 13 and the front housing 12 are connected through threaded fasteners on the side away from the display panel 11. Therefore, the main board 15 is mounted to the front housing 12 and is disposed between the front housing 12 and the rear housing 13. It should be noted that, as shown in FIG. 1 and FIG. 8, the housing has an avoiding hole, the rear housing 13 has an avoiding hole 14, and the electrical connector is exposed from the avoiding hole, so that the electrical connector can pass through the avoiding hole 14 to be electrically connected to the vehicle.

The electrical connector is mounted to the display screen and is electrically connected to the display screen. The electrical connector is integrated with a plurality of wiring harness connecting positions, the plurality of wiring harness connecting positions being configured to transmit at least two different types of data and electrically connected to the vehicle, and the wiring harness connecting positions including an HSD wiring harness connecting position and a CAN wiring harness connecting position.

The electrical connector according to the embodiments of the present invention includes a male connector 20 or a female connector 30.

As shown in FIG. 1, one of the male connector 20 and the female connector 30 is electrically connected to the display screen, and the other of the male connector 20 and the female connector 30 is electrically connected to the vehicle. One of the male connector 20 and the female connector 30 directly faces the avoiding hole 14, and one of the male connector 20 and the female connector 30 is exposed from the avoiding hole 14. For example, the male connector 20 is electrically connected to the display screen, and the female connector 30 is electrically connected to the vehicle, or the female connector 30 is electrically connected to the display screen, and the male connector 20 is electrically connected to the vehicle.

In the following, only the male connector 20 is mounted to the display screen and the female connector 30 is mounted to the vehicle, for example. The embodiment in which the female connector 30 is mounted to the display screen and the male connector 20 is mounted to the vehicle is basically the same as the previous embodiment, which is not described herein again.

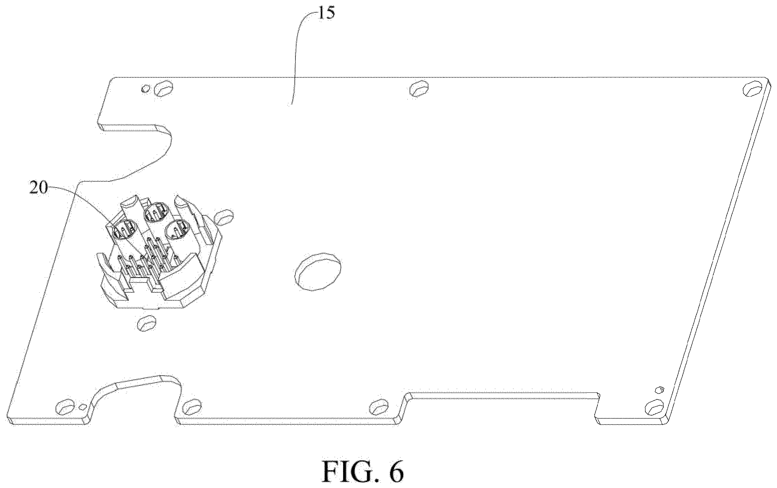

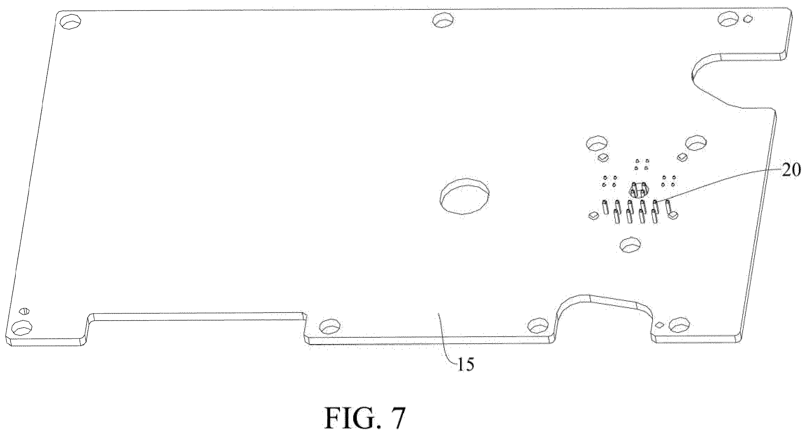

Therefore, the display screen and the vehicle can be electrically connected through mating connection between the male connector 20 and the female connector 30 of the electrical connector, thereby achieving data information transmission between the display screen and the vehicle. As shown in FIG. 6 and FIG. 7, the male connector 20 is mounted to the main board 15, for example, the male connector 20 and the main board 15 are connected through a wave soldering patch, and then the male connector 20 is stably fixed to the main board 15, the male connector 20 directly facing the avoiding hole 14 and being exposed from the avoiding hole 14, to facilitate mating connection of the female connector 30 and the male connector 20.

It may be understood that after the male connector 20 is mounted to the main board 15, the main board 15 is first connected to the front housing 12 through threaded fasteners. In this way, the male connector 20 can be stably fixed to the front housing 12 and can be connected to the display panel 11 through pipelines. Then the rear housing 13 is fixedly connected to the front housing 12, so that the rear housing 13 and the front housing 12 are connected to form a whole. The male connector 20 is disposed between the rear housing 13 and the front housing 12, and is at least partially exposed from the avoiding hole 14 of the rear housing 13 to be connected to the female connector 30. To this end, the connection between the display panel 11 and the vehicle can be achieved by electrically connecting the male connector 20 and the female connector 30, and the connecting structure is simple and easy to be mounted, facilitating use of the passenger.

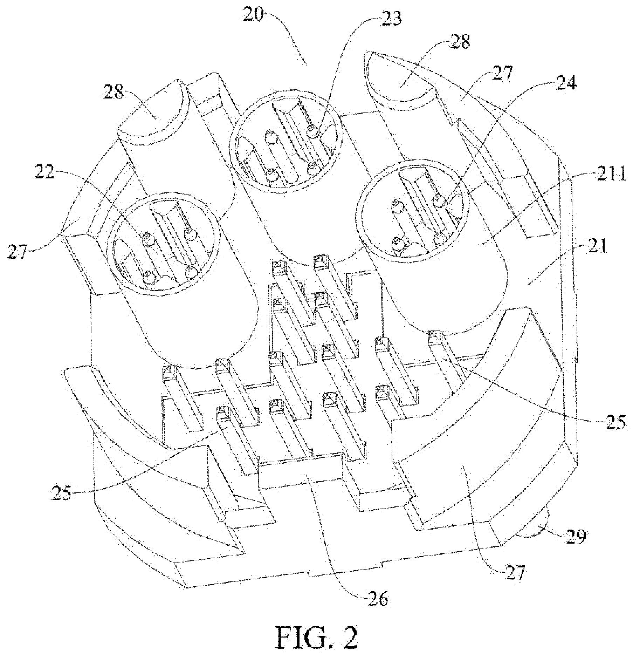

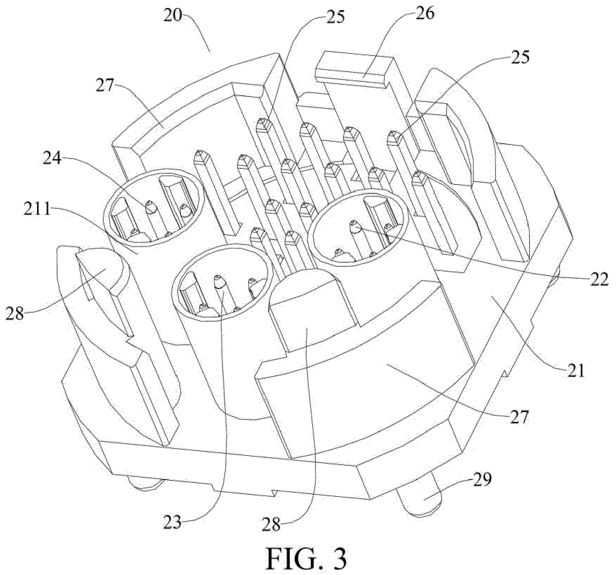

As shown in FIG. 2 and FIG. 3, when the electrical connector includes a male connector 20, the male connector 20 includes a base 21, an HSD (High Speed Data) wire connector, and a CAN (Controller Area Network) line connector 25, the HSD wire connector being capable of transmitting a high-frequency signal, and the CAN line connector 25 being capable of transmitting a low-frequency signal.

As shown in FIG. 2 and FIG. 3, the base 21 is a main structure of the male connector 20 and serves as the support of the entire male connector 20. The base 21 may be made of zinc alloy. The shape of the base 21 is square, and the periphery of the base 21 is rounded. For example, a side length of the base 21 is 22.45 mm. The HSD line connector and the CAN line connector 25 are both disposed on the base 21 at intervals. The HSD line connector and the CAN line connector 25 are mounted to a first side of the base 21 spaced apart from each other. The HSD line connector includes a shielding ring 211 and a plurality of HSD line pins, both of which can be mounted to the first side of the base 21. The first side refers to a side surface of the base 21 facing away from the front housing 12, and the first side of the base 21 is adapted to be matched with female connector 30. As shown in FIG. 2 and FIG. 3, the shielding ring 211 is sleeved outside the HSD line pins, and the shielding ring 211 may be a metal piece. For example, the shielding ring 211 may be integrally formed with the base 21. It should be noted that the HSD line pins are configured to electrically connect the male connector 20 and the female connector 30. By covering the HSD line pins with the shielding ring 211, interference of an external magnetic field or current on information transmission of the HSD line can be shielded, thereby improving safety of using the electrical connector.

As shown in FIG. 2 and FIG. 3, the HSD line connector includes at least one of a low-voltage differential signal connector 22, a panoramic image connector 23, and a USB (Universal Serial Bus) connector 24. For example, the HSD line connector includes the low-voltage differential signal connector 22, the panoramic image connector 23, and the USB connector 24, which are arranged on the base 21 in a triangle shape, and each of which includes a plurality of pins. For example, as shown in FIG. 2 and FIG. 3, the low-voltage differential signal connector 22 includes four HSD line pins, the panoramic image connector 23 includes four HSD line pins, and the USB connector 24 includes four HSD line pins. In some embodiments, the shielding ring 211 is respectively sleeved on each of the plurality of pins of the low-voltage differential signal connector 22, the panoramic image connector 23, and the USB connector 24, so that the low-voltage differential signal connector 22, the panoramic image connector 23, the USB connector 24 or the CAN line connector 25 do not interfere with each other, ensuring normal information transmission of the low-voltage differential signal connector 22, the panoramic image connector 23, and the USB connector 24, and improving the safety of using the electrical connector. In some other embodiments, the plurality of pins of the low-voltage differential signal connector 22, the plurality of pins of the panoramic image connector 23, and the plurality of pins of the USB connector 24 are sleeved with a common shielding ring 211, common shielding ring 211 being capable of separating the low-voltage differential signal connector 22, the panoramic image connector 23, the USB connector 24, and the CAN line connector 25 from each other, that is, the shielding ring 211 is used to separate the high-frequency signal transmitted by the HSD line connector from the low-frequency signal transmitted by the CAN line connector 25, thereby avoiding mutual interference between the high-frequency signal and the low-frequency signal, further improving the stability of the signal transmitted by the electrical connector.

As shown in FIG. 2 and FIG. 3, the CAN line connector 25 includes a plurality of CAN line pins, some of the plurality of CAN line pins being arranged between the low-voltage differential signal connector 22 and the USB connector 24, and the remaining of the plurality of CAN line pins being arranged at a position opposite to the HSD line connector. For example, as shown in FIG. 2 and FIG. 3, the CAN line connector 25 includes 14 CAN line pins, four CAN line pins being arranged between the low-voltage differential signal connector 22 and the USB connector 24, and ten CAN line pins being arranged at a position opposite to the HSD line connector. Therefore, a plurality of HSD line pins of the HSD line connector and the plurality of CAN line pins of the CAN line connector 25 are reasonably and compactly arranged on the first side of the base 21, which greatly improves space utilization of the electrical connector, reduces the volume of the overall structure of the electrical connector, reduces the materials required for production, and reduces processing costs.

As shown in FIG. 2 and FIG. 3, the male connector 20 is electrically connected to the display screen, and a second side of the base 21 is provided with mounting pins 29 electrically connected to the main board 15 of the display screen, so that when the male connector 20 and the female connector 30 are connected and matched, the female connector 30 can be in communication with the display screen through the male connector 20 and the mounting pins 29, thereby achieving electrical connection between the display screen and the vehicle and ensuring turn-on of the signal.

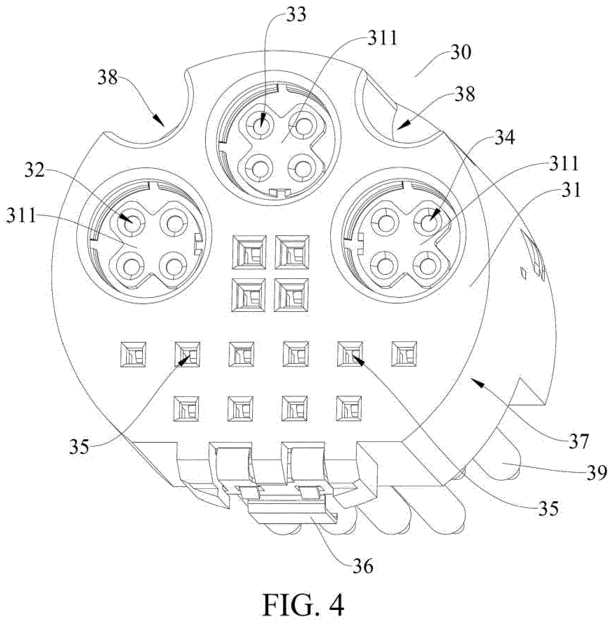

As shown in FIG. 4, when the electrical connector includes the female connector 30, the female connector 30 includes a base body 31, an HSD wire interface, and a CAN wire interface 35, the HSD wire interface being capable of transmitting a high-frequency signal, and the CAN wire interface 35 being capable of transmitting a low-frequency signal.

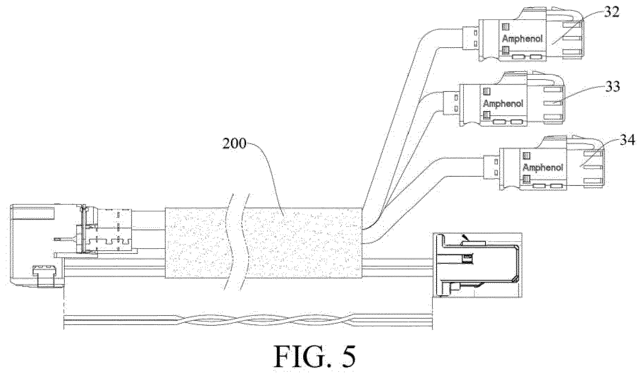

The base body 31 is the main structure of the female connector 30. When the female connector 30 is matched with the male connector 20, the base body 31 is adapted to be attached to the first side of the base 21. As shown in FIG. 4, the base body 31 is a plastic member and is round in shape, and the side of the base body 31 facing toward the male connector 20 is cut flat. For example, a diameter of the base body 31 is 20.5 mm, and both the HSD line interface and the CAN line interface 35 are disposed on the base body 31 at intervals and mounted to the first side of the base 21 spaced apart from each other. The HSD line interface includes a shielding post 311 and a plurality of non-connected HSD line pins, the shielding post 311 and the plurality of non-connected HSD line pins being disposed on the base body 31 to match the male connector 20. It should be noted that, as shown in FIG. 4 and FIG. 5, one side of the female connector 30 facing away from the male connector 20 is provided with a pin 39, the pin 39 being connected to a wiring harness 200 of the vehicle. When the female connector 30 is electrically connected to the male connector 20, the pin 39 electrically connects the electrical connector to the vehicle, thereby realizing the electrical connection between the display screen and the vehicle.

As shown in FIG. 4, a cavity is provided between the shielding post 311 and the base body 31. When the male connector 20 and the female connector 30 are matched, the cavity is used to match the shielding ring 211, and the shielding ring 211 can be inserted into the cavity, so that the non-connected HSD line pins and the HSD line pins are shielded from the outside to ensure safe and stable signal transmission between the non-connected HSD line pins and the HSD line pins. The non-connected HSD line pins are disposed on the shielding post 311. It should be noted that the plurality of non-connected HSD line pins disposed on the shielding post 311 are connected to the plurality of HSD line pins of the base 21, that is, the plurality of non-connected HSD line pins are connected to the plurality of HSD line pins in a one-to-one correspondence manner, which facilitates information transmission between the male connector 20 and the female connector 30, ensuring signal turn-on between the display screen and the vehicle, and improving the safety of using the electrical connector.

The HSD line interface is adapted to be electrically connected to the HSD line connector. As shown in FIG. 4, the HSD line interface includes at least one of a low-voltage differential signal interface 32, a panoramic image interface 33, and a USB interface 34. It should be noted that the HSD line interface should be adapted to be connected to the HSD line connector through matching. For example, the HSD line interface includes the low-voltage differential signal interface 32, and the HSD line connector includes the low-voltage differential signal connector 22. To this end, the low-voltage differential signal interface 32 of the HSD line interface is adapted to be matched with and connected to the low-voltage differential signal connector 22 of the HSD line connector, so as to ensure that the structural of the HSD line interface and the HSD line connector is arranged reasonably, facilitating the plug-in matching between the male connector 20 and the female connector 30, and facilitating the use of passengers.

In another example, in some embodiments, the HSD line interface includes a low-voltage differential signal interface 32, a panoramic image interface 33, and a USB interface 34. The HSD line interface includes a low-voltage differential signal connector 22, a panoramic image connector 23, and a USB connector 24. The low-voltage differential signal connector 22 is adapted to be electrically connected to the low-voltage differential signal interface 32, the panoramic image connector 23 is adapted to be electrically connected to the panoramic image interface 33, the USB connector 24 is adapted to be electrically connected to the USB interface 34, and the low-voltage differential signal interface 32, the panoramic image interface 33, and the USB interface 34 are arranged on the base body 31 in a triangle shape. The low-voltage differential signal interface 32, the panoramic image interface 33, and the USB interface 34 all include a plurality of pins. For example, as shown in FIG. 4, the low-voltage differential signal connector 22 includes four non-connected HSD line pins, the panoramic image interface 33 includes four non-connected HSD line pins, and the USB interface 34 includes four non-connected HSD line pins. In this way, when the female connector 30 is connected to the male connector 20, the plurality of HSD line pins of the HSD line connector can be plugged into the plurality of non-connected HSD line pins of the HSD line interface in a one-to-one correspondence manner. For example, the four non-connected HSD line pins of the low-voltage differential signal interface 32 are connected to the four HSD line pins of the low-voltage differential signal connector 22 in one-to-one correspondence, the four non-connected HSD line pins of the panoramic image interface 33 are connected to the four HSD line pins of the panoramic image connector 23 in one-to-one correspondence, and the four non-connected HSD line pins of the USB interface 34 are connected to the four HSD line pins of the USB connector 24 in one-to-one correspondence to complete the connection between the female connector 30 and male connector 20, thereby achieving the electrical connection between the display screen and the vehicle.

It should be noted that, as shown in FIG. 4, the HSD line interface and the HSD line connector are distributed in a triangular shape. Therefore, when the passenger connects the male connector 20 and the female connector 30, the HSD line interface and the HSD line connector are easily aligned with each other, which facilitates corresponding connection between the pins and the non-connected pins of the electrical connector at the correct angle, which can prevent the pins of the male connector 20 and the non-connected pins of the female connector 30 from being incorrectly connected, and avoiding plug-in accidents of the electrical connector, to ensure normal transmission of information between the male connector 20 and the female connector 30, thereby improving the safety of using the electrical connector.

As shown in FIG. 4, the CAN line interface 35 is adapted to be electrical connected to the CAN line connector 25. The CAN line interface 35 includes a plurality of non-connected CAN line pins, some of the plurality of non-connected CAN line pins being arranged between the low-voltage differential signal interface 32 and the USB interface 34, and the remaining of the plurality of non-connected CAN line pins being arranged at a position opposite to the HSD line interface. For example, as shown in FIG. 4, the CAN line interface 35 includes 14 non-connected CAN line pins. Four non-connected CAN line pins are arranged between the low-voltage differential signal interface 32 and the USB interface 34, and ten non-connected CAN line pins are arranged at a position opposite to the HSD line interface. Therefore, a plurality of non-connected HSD pins of the HSD line interface and the plurality of non-connected CAN line pins of the CAN line interface 35 are reasonably and compactly arranged on the base body 31. In this way, an arrangement form of the plurality of non-connected CAN line pins on the base body 31 is the same as an arrangement form of the plurality of CAN line pins on the base 21, so that when the male connector 20 and the female connector 30 are connected, the HSD line interface of the base body 31 is in a one-to-one correspondence with the HSD line connector of the base 21, and the non-connected CAN line pin of the base body 31 is in a one-to-one correspondence with the CAN line pin of the base 21, which facilitates matching and connection of the male connector 20 and the female connector 30, ensuring that different information through the electrical connector can be effectively and accurately transmitted.

In this way, the low-voltage differential signal connector 22, the panoramic image connector 23, the USB connector 24, and the CAN line connector 25 are integrated into the male connector 20, the low-voltage differential signal interface 32, the panoramic image interface 33, the USB interface 34, and the CAN line interface 35 are integrated into the female connector 30, and the male connector 20 and the female connector 30 are matched and connected to be integrated into an electrical connector, which greatly reduces the layout space of the electrical connector, improves the efficiency of vehicle assembly, and reduces the number of wiring harnesses 200 required. In addition, it is conducive to the layout of the wiring harness 200 of the vehicle, so that the electrical connector is more functional and has good practicability.

According to the vehicle-mounted display terminal 100 of the embodiment of the present invention, the electrical connector is connected between the display screen and the vehicle, and the male connector 20 and the female connector 30 of the electrical connector are respectively connected to the display screen and the vehicle. In addition, the electrical connector is integrated with an HSD line connector, an HSD line interface, a CAN line connector 25, and a CAN line interface 35, so that the electrical connector can achieve simultaneous transmission of a high-frequency signal and a low-frequency signal, thereby improving the practicability of the electrical connector, and effectively reducing the layout space of the electrical connector through matching of the male connector 20 and the female connector 30. In addition, the male connector 20 of the electrical connector is welded and connected to the main board 15 of the display screen through wave soldering, so that the overall structure of the display terminal 100 is more stable.

According to the vehicle-mounted display terminal 100 of the embodiment of the present invention, the electrical connector is connected between the display screen and the vehicle, and the male connector 20 and the female connector 30 of the electrical connector are respectively connected to the display screen and the vehicle. In addition, the male connector 20 is integrated with the low-voltage differential signal connector 22, the panoramic image connector 23, the USB connector 24, the CAN line connector 25, and the like, and the female head 30 is integrated with the low-voltage differential signal interface 32, the panoramic image interface 33, the USB interface 34, the CAN line interface 35, and the like. The mating connection between the male connector 20 and the female connector 30 can greatly improve the practicability of the electrical connector, effectively reduce the layout space of the electrical connector, and facilitate the layout of the wiring harness 200 of the vehicle. In addition, the male connector 20 of the electrical connector is welded and connected to the main board 15 of the display screen by wave soldering, thereby improving the connection strength between the electrical connector and the display screen.

The present invention further provides a vehicle 1000.

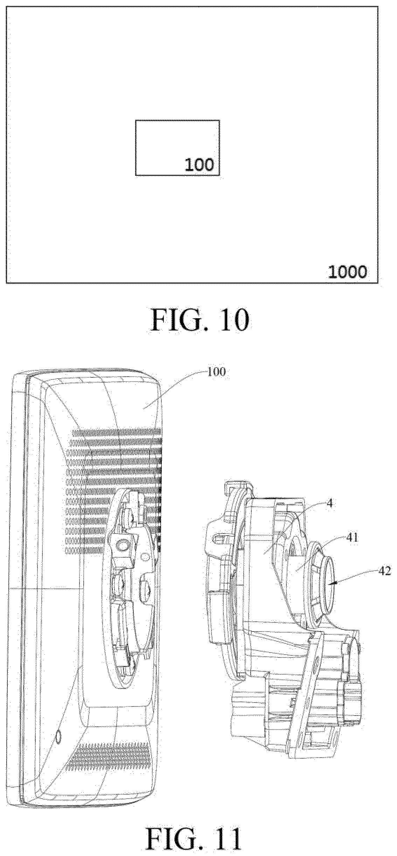

The vehicle 1000 according to an embodiment of the present invention, as shown in FIG. 10, includes a vehicle-mounted display terminal 100 of any of the foregoing embodiments and a wiring harness connector. The wiring harness connector is electrically connected to the vehicle and is electrically connected to an electrical connector.

In some embodiments, the vehicle-mounted display terminal 100 is pivotally mounted to the vehicle body through the rotating mechanism 4. As shown in FIG. 11, sides of the display terminal 100 and the rotating mechanism 4 facing each other are both provided with connecting positions. The connecting position of the display terminal 100 and the connecting position of the rotating mechanism 4 can be connected through threaded fasteners. Certainly, the rotating mechanism 4 and the display terminal 100 can also be connected in other connection manners. For example, the rotating mechanism 4 can be connected to the display terminal 100 by glue or welding. The rotating mechanism 4 has a hollow cavity, the hollow cavity penetrating the rotating mechanism 4, the electrical connector is disposed opposite to the hollow cavity, and the wiring harness of the wiring harness connector penetrates the hollow cavity to be connected to the electrical connector.

In some other embodiments, the vehicle-mounted display terminal 100 rotates along a plane of the display screen 10 through the rotating mechanism 4. As shown in FIG. 11, the rotating mechanism 4 includes a rotating shaft 41, the rotating shaft 41 having a hollow cavity 42, the wiring harness connector penetrating the hollow cavity 42 to be connected to the electrical connector.

The present invention further provides a vehicle 1000.

The vehicle 1000 according to an embodiment of the present invention, as shown in FIG. 10, includes a vehicle-mounted display terminal 100 of any of the foregoing embodiments and a wiring harness connector. The wiring harness connector is electrically connected to the vehicle end and is electrically connected to an electrical connector. The electrical connector includes one of a male connector and a female connector, the wiring harness connector includes the other of the male connector and the female connector, and a base and a base have a connecting structure and a positioning structure that are mutually matched with each other.

For example, the electrical connector includes a male connector 20, and the wiring harness connector includes a female connector 30. As shown in FIG. 2 to FIG. 4, the connecting structure includes a fastener 26 and a fastening position 36. The fastener 26 is disposed on the base 21, and the fastening position 36 is disposed on the base body 31, the fastener 26 being adapted to be engaged with the fastening position 36. When the male connector 20 is mated with the female connector 30, the fastener 26 is engaged with the fastening position 36, so that the male connector 20 and the female connector 30 are stably connected, facilitating in-place assembling of the male connector 20 and the female connector 30, to ensure the connection of the electrical connector, and prevent the male connector 20 and the female connector 30 from being separated from each other due to the vibration of the vehicle 1000 when the display screen is running. Stable engaging of the fastener 26 and the fastening position 36 can improve the safety of using the electrical connector and enhance the stability of the electrical connector.

As shown in FIG. 2 to FIG. 4, the positioning structure includes a plurality of limiting ribs 27 and a peripheral wall 37 of the base body 31. The limiting rib 27 is disposed on the base 21. For example, the limiting ribs 27 are arc-shaped and disposed around an HSD line connector and a CAN line connector 25. For example, as shown in FIG. 2 to FIG. 3, there are four limiting ribs 27, which are disposed at equal intervals around the HSD line connector and CAN line connector 25, and an inner side surface of the limiting rib 27 is adapted to be attached to the peripheral wall 37 of the base body 31. It should be noted that when the male connector 20 is plugged into the female connector 30, a plurality of pins of the male connector 20 are inserted into non-connected pins of the female connector 30, and a shielding ring 211 of the male connector 20 is inserted into a cavity of the female connector 30. The inner side surface of the limiting rib 27 is in contact with the peripheral wall 37 of the base body 31 and is gradually inserted until the inner side surface and the peripheral wall 37 are extremely attached to each other. In this way, the base body 31 and the base 21 are relatively fixed in a radial direction, so that the male connector 20 and the female connector 30 can be stably connected.

As shown in FIG. 2 to FIG. 4, the positioning structure further includes a guide post 28 and a guide groove 38. As shown in FIG. 2 to FIG. 3, the guide post 28 is disposed on the base 21, for example, an inner side surface of at least one limiting rib 27 is provided with the guide post 28. As shown in FIG. 4, the guide groove 38 is disposed on the base body 31 and mounted in cooperation with the guide post 28, so that the cooperation of the guide groove 38 and the guide post 28 can not only guide the mounting of the male connector 20 and the female connector 30, but also guide circumferential limiting of the base 21 and the base body 31, to avoid the assembly efficiency due to rotation of the male connector 20 and the female connector 30 relative to each other during the mounting of the electrical connector.

In one embodiment, as shown in FIG. 2 to FIG. 3, there are four limiting ribs 27, the four arc-shaped limiting ribs 27 being disposed in a circle and evenly spaced from each other in the circumferential direction. The four arc-shaped limiting ribs 27 surround the HSD line connector and the CAN line connector 25, inner side surfaces of two of the four arc-shaped limiting ribs 27 are provided with a guide post 28, and a fastener 26 is disposed between the other two of the four arc-shaped limiting ribs 27. The HSD line connector and four non-connected CAN line pins are disposed at positions close to the two of the four arc-shaped limiting ribs 27, and ten non-connected CAN line pins are disposed at positions close to the other two of the four arc-shaped limiting ribs 27. As a result, the layout of each structure disposed on the base 21 is structured, and the overall structure of the male connector 20 is clear. In addition, the various structures of the female connector 30 disposed on the base body 31 are arranged correspondingly to the male connector 20, so that when the male connector 20 and the female connector 30 are connected, the respective structures of the male connector 20 and the female connector 30 can be quickly aligned and mounted stably, which greatly improves the mounting efficiency of the electrical connector and improves the practicability.

In this way, the base 21 and the base body 31 can be axially limited through engagement of the fastener 26 and the fastening 36, so that the male connector 20 and the female connector 30 are connected more stably. The limiting rib 27 of the base 21 and the peripheral wall 37 of the base body 31 are attached to achieve radial limiting, and the guide post 28 and the guide groove 38 can limit the base 21 and the base body 31 in the circumferential direction. Therefore, the male connector 20 and the female connector 30 are relatively fixed in the circumferential, axial, and radial directions. The male connector 20 and the female connector 30 are plugged and connected stably, and the electrical connector will not be automatically disconnected, ensuring stable signal turn-on, thereby achieving information transmission of the low-voltage differential signal, the panoramic image, and the USB and the power supply function of the CAN line. The display screen can always maintain a stable working state, to improve the practicability of the display terminal 100.

A vehicle 1000 according to an embodiment of the present invention, as shown in FIG. 10, is provided with the vehicle-mounted display terminal 100 of any of the foregoing embodiments. In the vehicle 1000 of the embodiment of the present invention, the electrical connector is integrated with the information transmission of the low-voltage differential signal, the panoramic image, and the USB and the power supply function of the CAN line, has strong functionality and is easy to use, and the electrical connector is connected to the display screen by wave soldering.

The vehicle-mounted display terminal according to an embodiment of the present invention includes: a display screen; an electrical connector mounted to the display screen and electrically connected to the display screen, the electrical connector being integrated with a plurality of wiring harness connecting positions, the plurality of wiring harness connecting positions being configured to transmit at least two different types of data and being electrically connected to a vehicle.

For the vehicle-mounted display terminal according to an embodiment of the present invention, the display screen includes: a display panel, a housing, and a main board, the display panel and the main board being mounted to the housing, the electrical connector being mounted to and electrically connected to the main board, and the housing having an avoiding hole, the electrical connector being exposed from the avoiding hole.

For the vehicle-mounted display terminal according to an embodiment of the present invention, the wiring harness connecting position includes an HSD wiring harness connecting position and a CAN wiring harness connecting position.

For the vehicle-mounted display terminal according to an embodiment of the present invention, the electrical connector includes a male electrical connector or a female connector; when the electrical connector includes the male connector, the male connector including: a base, an HSD line connector, and a CAN line connector, the HSD line connector and the CAN line connector being mounted to a first side of the base spaced apart from each other; when the electrical connector includes the female connector, the female connector including: a base body, an HSD line interface, and a CAN line interface, the HSD line interface and the CAN line interface being mounted to a first side of the base body spaced apart from each other.

When the electrical connector includes the male connector, the HSD line connector includes a shielding ring and a plurality of HSD line pins, the shielding ring being sleeved outside the HSD line pins; and when the electrical connector includes the female connector, the HSD line interface includes a shielding post disposed on the base body and a plurality of non-connected HSD line pins, a cavity being provided between the shielding post and the base body, and the non-connected HSD line pins being disposed on the shielding post.

For the vehicle-mounted display terminal according to an embodiment of the present invention, when the electrical connector includes the male connector, a second side of the base is provided with mounting pins, the mounting pins being in a one-to-one correspondence with the HSD line pins and being electrically connected to the main board of the display screen; and when the electrical connector includes the female connector, a second side of the base body is provided with mounting pins, the mounting pins being in a one-to-one correspondence with the non-connected HSD line pins and being electrically connected to the main board of the display screen.

For the vehicle-mounted display terminal according to an embodiment of the present invention, when the electrical connector includes the male connector, the HSD line connector includes at least one of a low-voltage differential signal connector, a panoramic image connector, and a USB connector; and when the electrical connector includes the female connector, the HSD line interface includes at least one of the low-voltage differential signal interface, the panoramic image interface, and the USB interface.

For the vehicle-mounted display terminal according to an embodiment of the present invention, when the electrical connector includes the male connector, the HSD line connector includes the low-voltage differential signal connector, the panoramic image connector, and the USB connector; and when the electrical connector includes the female connector, the HSD line interface includes the low-voltage differential signal interface, the panoramic image interface, and the USB interface.

For the vehicle-mounted display terminal according to an embodiment of the present invention, when the electrical connector includes the male connector, the low-voltage differential signal connector, the panoramic image connector, and the USB connector are arranged on the base in a triangle shape, and the CAN line connector includes a plurality of CAN line pins, some of the plurality of CAN line pins being arranged between the low-voltage differential signal connector and the USB connector, and the remaining of the plurality of CAN line pins being arranged at a position opposite to the HSD line connector; and when the electrical connector includes the female connector, the low-voltage differential signal interface, the panoramic image interface, and the USB interface are arranged on the base body in a triangle shape, and the CAN line interface includes a plurality of non-connected CAN line pins, some of the plurality of non-connected CAN line pins being arranged between the low-voltage differential signal interface and the USB interface, and the remaining of the plurality of non-connected CAN line pins being arranged at a position opposite to the HSD line interface.

The vehicle according to an embodiment of the present invention includes: the vehicle-mounted display terminal of the foregoing embodiment; and a wiring harness connector electrically connected to a vehicle end and to the electrical connector.

For the vehicle according to an embodiment of the present invention, the vehicle-mounted display terminal is pivotally mounted to a vehicle body through a rotating mechanism, the rotating mechanism having a hollow cavity, the electrical connector being disposed opposite to the hollow cavity, and a wiring harness of the wiring harness connector penetrating through the hollow cavity.

For the vehicle according to an embodiment of the present invention, the vehicle-mounted display terminal rotates around a rotating mechanism along a plane on which a display screen is located, the rotating mechanism including a rotating shaft, the rotating shaft having the hollow cavity.

A vehicle according to another embodiment of the present invention includes: the vehicle-mounted display terminal of the foregoing embodiment; and a wiring harness connector electrically connected to a vehicle end and electrically connected to the electrical connector, where the electrical connector includes one of a male connector and a female connector, the wiring harness connector includes the other of the male connector and the female connector, and the base and the base body have a connecting structure and a positioning structure that are mutually matched with each other.

For the vehicle according to another embodiment of the present invention, the connecting structure includes a fastener disposed on the base and a fastening position disposed on the base body, the fastener being adapted to be engaged with the fastening position.

For the vehicle according to another embodiment of the present invention, the positioning structure includes a plurality of limiting ribs disposed on the base and a peripheral wall of the base body, the limiting ribs being disposed around the HSD line connector and the CAN line connector, and inner side surfaces of the limiting ribs being adapted to be attached to the peripheral wall of the base body.

For the vehicle according to another embodiment of the present invention, the positioning structure includes a guide post disposed on the base and a guide groove disposed on the base body.

## Claims

1. A display terminal (100) configured to be mounted in a vehicle (1000), the display terminal (100) comprising:
a display screen;
an electrical connector mounted to the display screen and electrically connected to the display screen, the electrical connector being integrated with a plurality of wiring harness connecting positions, the plurality of wiring harness connecting positions being configured to transmit at least two different types of data and to be electrically connected to the vehicle (1000),
**characterized in that** the plurality of wiring harness connecting positions comprise an HSD wiring harness connecting position and a CAN wiring harness connecting position.

2. The display terminal (100) according to claim 1, wherein the display screen comprises: a display panel (11), a housing (13), and a main board (15), the display panel (11) and the main board (15) being mounted to the housing (13), the electrical connector being mounted to and electrically connected to the main board (15), and the housing (13) having an avoiding hole (14), the electrical connector being exposed from the avoiding hole (14).

3. The display terminal (100) according to claim 1 or 2, wherein the electrical connector comprises a male connector (20) or a female connector (30),
when the electrical connector comprises the male connector (20), the male connector (20) comprising: a base (21), an HSD line connector, and a CAN line connector (25), the HSD line connector and the CAN line connector (25) being mounted to a first side of the base (21) spaced apart from each other; and
when the electrical connector comprises the female connector (30), the female connector (30) comprising: a base body (31), an HSD line interface, and a CAN line interface (35), the HSD line interface and the CAN line interface (35) being mounted to a first side of the base body (31) spaced apart from each other.

4. The display terminal (100) according to claim 3, wherein
when the electrical connector comprises the male connector (20), the HSD line connector comprises a shielding ring (211) and a plurality of HSD line pins, the shielding ring (211) being sleeved outside the HSD line pins; and
when the electrical connector comprises the female connector (30), the HSD line interface comprises a shielding post (311) disposed on the base body (31) and a plurality of non-connected HSD line pins, a cavity being provided between the shielding post (311) and the base body (31), and the non-connected HSD line pins being disposed on the shielding post (311).

5. The display terminal (100) according to claim 4, wherein
when the electrical connector comprises the male connector (20), a second side of the base is provided with mounting pins (29), the mounting pins (29) being in a one-to-one correspondence with the HSD line pins and being electrically connected to the main board (15) of the display screen; and
when the electrical connector comprises the female connector (30), a second side of the base body (31) is provided with mounting pins (39), the mounting pins (39) being in a one-to-one correspondence with the non-connected HSD line pins and being electrically connected to the main board (15) of the display screen.

6. The display terminal (100) according to any of claims 3 to 5, wherein
when the electrical connector comprises the male connector (20), the HSD line connector comprises at least one of a low-voltage differential signal connector (22), a panoramic image connector (23), and a USB connector (24); and
when the electrical connector comprises the female connector (30), the HSD line interface comprises at least one of the low-voltage differential signal interface (32), the panoramic image interface (33), and the USB interface (34).

7. The display terminal (100) according to any of claims 3 to 6, wherein
when the electrical connector comprises the male connector (20), the HSD line connector comprises the low-voltage differential signal connector (22), the panoramic image connector (23), and the USB connector (24); and
when the electrical connector comprises the female connector (30), the HSD line interface comprises the low-voltage differential signal interface (32), the panoramic image interface (33), and the USB interface (34).

8. The display terminal (100) according to claim 7, wherein
when the electrical connector comprises the male connector (20), the low-voltage differential signal connector (22), the panoramic image connector (23), and the USB connector (24) are arranged on the base in a triangle shape, and the CAN line connector (25) comprises a plurality of CAN line pins, some of the plurality of CAN line pins being arranged between the low-voltage differential signal connector (22) and the USB connector (24), and the remaining of the plurality of CAN line pins being arranged at a position opposite to the HSD line connector; and
when the electrical connector comprises the female connector (30), the low-voltage differential signal interface (32), the panoramic image interface (33), and the USB interface (34) are arranged on the base body (31) in a triangle shape, and the CAN line interface (35) comprises a plurality of non-connected CAN line pins, some of the plurality of non-connected CAN line pins being arranged between the low-voltage differential signal interface (32) and the USB interface (34), and the remaining of the plurality of non-connected CAN line pins being arranged at a position opposite to the HSD line interface.

9. A vehicle (1000), comprising:
the display terminal (100) according to any of claims 1 to 8; and
a wiring harness connector electrically connected to a vehicle end and electrically connected to the electrical connector.

10. The vehicle (1000) according to claim 9, wherein the display terminal (100) is pivotally mounted to a vehicle body through a rotating mechanism (4), the rotating mechanism (4) having a hollow cavity (42), the electrical connector being disposed opposite to the hollow cavity (42), and a wiring harness (200) of the wiring harness connector penetrating through the hollow cavity (42).

11. The vehicle (1000) according to claim 9, wherein the display terminal (100) is configured to rotate around a rotating mechanism (4) along a plane on which a display screen is located, the rotating mechanism (4) comprising a rotating shaft (41), the rotating shaft having the hollow cavity (42).

12. A vehicle (1000), comprising:
the display terminal (100) according to any of claims 3 to 8; and
a wiring harness connector electrically connected to a vehicle end and electrically connected to the electrical connector, wherein
the electrical connector comprises one of a male connector (20) and a female connector (30), the wiring harness connector comprises the other of the male connector (20) and the female connector (30), and the base (21) and the base body (31) have a connecting structure and a positioning structure that are mutually matched with each other.

13. The vehicle (1000) according to claim 12, wherein the connecting structure comprises a fastener (26) disposed on the base (21) and a fastening position (36) disposed on the base body (31), the fastener (26) being adapted to be engaged with the fastening position (36).

14. The vehicle (1000) according to claim 12 or 13, wherein the positioning structure comprises a plurality of limiting ribs (27) disposed on the base (21) and a peripheral wall (37) of the base body (31), the limiting ribs (27) being disposed around the HSD line connector and the CAN line connector (25), and inner side surfaces of the limiting ribs (27) being adapted to be attached to the peripheral wall (37) of the base body (31).

15. The vehicle (1000) according to claim 12 or 13, wherein the positioning structure comprises a guide post (28) disposed on the base and a guide groove (38) disposed on the base body (31).

## Patentansprüche

1. Anzeigeterminal (100), das so konfiguriert ist, dass es in einem Fahrzeug (1000) montiert werden kann, wobei das Anzeigeterminal (100) Folgendes umfasst:
einen Bildschirm;
einen elektrischen Verbinder, der an dem Anzeigeschirm angebracht und elektrisch mit dem Anzeigeschirm verbunden ist, wobei der elektrische Verbinder mit einer Vielzahl von Bordnetz- bzw. Kabelbaum-Verbindungspositionen integriert ist, wobei die Vielzahl von Kabelbaum-Verbindungspositionen so konfiguriert ist, dass sie mindestens zwei verschiedene Arten von Daten übertragen und elektrisch mit dem Fahrzeug (1000) verbunden sind,
**dadurch gekennzeichnet, dass** die Vielzahl von Kabelbaum-Verbindungspositionen eine HSD-Kabelbaum-Verbindungsposition und eine CAN-Kabelbaum-Verbindungsposition umfasst.

2. Anzeigeterminal (100) nach Anspruch 1, wobei der Anzeigeschirm umfasst: eine Anzeigetafel (11), ein Gehäuse (13) und eine Hauptplatine (15), wobei die Anzeigetafel (11) und die Hauptplatine (15) an dem Gehäuse (13) angebracht sind, der elektrische Verbinder an der Hauptplatine (15) angebracht und mit dieser elektrisch verbunden ist, und das Gehäuse (13) ein Ausweichloch (14) aufweist, wobei der elektrische Verbinder aus dem Ausweichloch (14) herausragt.

3. Anzeigeterminal (100) nach Anspruch 1 oder 2, wobei der elektrische Anschluss einen Stecker (20) oder eine Buchse (30) umfasst,
wenn der elektrische Verbinder den Steckverbinder (20) umfasst, der Steckverbinder (20) Folgendes umfasst: eine Basis (21), einen HSD-Leitungsverbinder und einen CAN-Leitungsverbinder (25), wobei der HSD-Leitungsverbinder und der CAN-Leitungsverbinder (25) an einer ersten Seite der Basis (21) beabstandet voneinander angebracht sind; und
wenn der elektrische Verbinder die Buchse (30) umfasst, die Buchse (30) Folgendes umfasst: einen Basiskörper (31), eine HSD-Leitungsschnittstelle und eine CAN-Leitungsschnittstelle (35), wobei die HSD-Leitungsschnittstelle und die CAN-Leitungsschnittstelle (35) an einer ersten Seite des Basiskörpers (31) beabstandet voneinander angebracht sind.

4. Anzeigeterminal (100) nach Anspruch 3, wobei
wenn der elektrische Verbinder den Stecker (20) umfasst, der HSD-Leitungsverbinder einen Abschirmungsring (211) und eine Vielzahl von HSD-Leitungsstiften umfasst, wobei der Abschirmungsring (211) außerhalb der HSD-Leitungsstifte ummantelt ist; und
wenn der elektrische Verbinder die Buchse (30) umfasst, umfasst die HSD-Leitungsschnittstelle einen Abschirmungspfosten (311), der auf dem Grundkörper (31) angeordnet ist, und eine Vielzahl von nicht verbundenen HSD-Leitungsstiften, wobei ein Hohlraum zwischen dem Abschirmungspfosten (311) und dem Grundkörper (31) vorgesehen ist und die nicht verbundenen HSD-Leitungsstifte auf dem Abschirmungspfosten (311) angeordnet sind.

5. Anzeigeterminal (100) nach Anspruch 4, wobei
wenn der elektrische Verbinder den Stecker (20) umfasst, eine zweite Seite der Basis mit Montagestiften (29) versehen ist, wobei die Montagestifte (29) in einer Eins-zu-Eins-Entsprechung mit den HSD-Leitungsstiften stehen und elektrisch mit der Hauptplatine (15) des Anzeigebildschirms verbunden sind; und
wenn der elektrische Verbinder die Buchse (30) umfasst, eine zweite Seite des Grundkörpers (31) mit Montagestiften (39) versehen ist, wobei die Montagestifte (39) in einer Eins-zu-Eins-Entsprechung mit den nicht verbundenen HSD-Leitungsstiften stehen und elektrisch mit der Hauptplatine (15) des Anzeigebildschirms verbunden sind.

6. Anzeigeterminal (100) nach einem der Ansprüche 3 bis 5, wobei
wenn der elektrische Verbinder den Stecker (20) umfasst, umfasst der HSD-Leitungsverbinder mindestens einen von einem Niederspannungs-Differenzsignalverbinder (22), einem Panoramabildverbinder (23) und einem USB-Verbinder (24); und
wenn der elektrische Anschluss die Buchse (30) umfasst, umfasst die HSD-Leitungsschnittstelle mindestens eine der folgenden Schnittstellen: die Niederspannungs-Differenzsignalschnittstelle (32), die Panoramabildschnittstelle (33) und die USB-Schnittstelle (34).

7. Anzeigeterminal (100) nach einem der Ansprüche 3 bis 6, wobei
wenn der elektrische Verbinder den männlichen Verbinder (20) umfasst, umfasst der HSD-Leitungsverbinder den Niederspannungs-Differenzsignalverbinder (22), den Panoramabildverbinder (23) und den USB-Verbinder (24); und
wenn der elektrische Anschluss die Buchse (30) umfasst, umfasst die HSD-Leitungsschnittstelle die Niederspannungs-Differenzsignalschnittstelle (32), die Panoramabildschnittstelle (33) und die USB-Schnittstelle (34).

8. Anzeigeterminal (100) nach Anspruch 7, wobei
wenn der elektrische Verbinder den Stecker (20) umfasst, der Niederspannungs-Differenzsignalverbinder (22), der Panoramabildverbinder (23) und der USB-Verbinder (24) auf der Basis in einer Dreiecksform angeordnet sind und der CAN-Leitungsverbinder (25) eine Vielzahl von CAN-Leitungsstiften umfasst, wobei einige der Vielzahl von CAN-Leitungsstiften zwischen dem Niederspannungs-Differenzsignalverbinder (22) und dem USB-Verbinder (24) angeordnet sind und die verbleibenden der Vielzahl von CAN-Leitungsstiften an einer Position gegenüber dem HSD-Leitungsverbinder angeordnet sind; und
wenn der elektrische Verbinder die Buchse (30) umfasst, die Niederspannungs-Differenzsignalschnittstelle (32), die Panoramabildschnittstelle (33) und die USB-Schnittstelle (34) auf dem Grundkörper (31) in einer Dreiecksform angeordnet sind, und die CAN-Leitungsschnittstelle (35) eine Vielzahl von nicht verbundenen CAN-Leitungsstiften umfasst, einige der mehreren nicht verbundenen CAN-Leitungsstifte zwischen der Niederspannungs-Differenzsignalschnittstelle (32) und der USB-Schnittstelle (34) angeordnet sind und die übrigen der mehreren nicht verbundenen CAN-Leitungsstifte an einer der HSD-Leitungsschnittstelle gegenüberliegenden Position angeordnet sind.

9. Fahrzeug (1000), umfassend:
das Anzeigeterminal (100) nach einem der Ansprüche 1 bis 8; und
einen Bordnetz- bzw. Kabelbaumstecker, der elektrisch mit einem Fahrzeugende und elektrisch mit dem elektrischen Stecker verbunden ist.

10. Fahrzeug (1000) nach Anspruch 9, wobei das Anzeigeterminal (100) über einen Drehmechanismus (4) schwenkbar an einer Fahrzeugkarosserie angebracht ist, wobei der Drehmechanismus (4) einen Hohlraum (42) aufweist, der elektrische Verbinder gegenüber dem Hohlraum (42) angeordnet ist und ein Kabelbaum (200) des Kabelbaumverbinders den Hohlraum (42) durchdringt.

11. Fahrzeug (1000) nach Anspruch 9, wobei das Anzeigeterminal (100) so konfiguriert ist, dass es sich um einen Drehmechanismus (4) entlang einer Ebene dreht, auf der sich ein Anzeigebildschirm befindet, wobei der Drehmechanismus (4) eine Drehwelle (41) umfasst, wobei die Drehwelle den Hohlraum (42) aufweist.

12. Fahrzeug (1000), umfassend:
das Anzeigeterminal (100) nach einem der Ansprüche 3 bis 8; und
einen Bordnetz- bzw. Kabelbaumverbinder, der elektrisch mit einem Fahrzeugende und elektrisch mit dem elektrischen Verbinder verbunden ist, wobei
der elektrische Verbinder einen von einem männlichen Verbinder (20) und einem weiblichen Verbinder (30) umfasst, der Kabelbaumverbinder den anderen von dem männlichen Verbinder (20) und dem weiblichen Verbinder (30) umfasst, und die Basis (21) und der Basiskörper (31) eine Verbindungsstruktur und eine Positionierungsstruktur aufweisen, die gegenseitig aneinander angepasst sind.

13. Fahrzeug (1000) nach Anspruch 12, wobei die Verbindungsstruktur ein Befestigungselement (26), das an der Basis (21) angeordnet ist, und eine Befestigungsposition (36), die an dem Basiskörper (31) angeordnet ist, umfasst, wobei das Befestigungselement (26) angepasst ist, um mit der Befestigungsposition (36) in Eingriff gebracht zu werden.

14. Fahrzeug (1000) nach Anspruch 12 oder 13, wobei die Positionierungsstruktur eine Vielzahl von Begrenzungsrippen (27) umfasst, die an der Basis (21) und einer Umfangswand (37) des Basiskörpers (31) angeordnet sind, wobei die Begrenzungsrippen (27) um das HSD-Leitungsverbindungsstück und das CAN-Leitungsverbindungsstück (25) herum angeordnet sind und die inneren Seitenflächen der Begrenzungsrippen (27) so angepasst sind, dass sie an der Umfangswand (37) des Basiskörpers (31) befestigt werden können.

15. Fahrzeug (1000) nach Anspruch 12 oder 13, wobei die Positionierungsstruktur einen an der Basis angeordneten Führungspfosten (28) und eine an dem Basiskörper (31) angeordnete Führungsnut (38) umfasst.

## Revendications

1. Terminal d'affichage (100) configuré pour être monté dans un véhicule (1000), le terminal d'affichage (100) comprenant :
un écran d'affichage ;
un connecteur électrique monté sur l'écran d'affichage et connecté électriquement à l'écran d'affichage, le connecteur électrique étant intégré à une pluralité de positions de connexion de faisceau de câblage, la pluralité de positions de connexion de faisceau de câblage étant configurée pour transmettre au moins deux types différents de données et pour être connectée électriquement au véhicule (1000),
**caractérisé en ce que** la pluralité de positions de connexion de faisceau de câblage comprend une position de connexion de faisceau de câblage HSD et une position de connexion de faisceau de câblage CAN.

2. Terminal d'affichage (100) selon la revendication 1, dans lequel l'écran d'affichage comprend : un panneau d'affichage (11), un logement (13), et une carte principale (15), le panneau d'affichage (11) et la carte principale (15) étant montés sur le logement (13), le connecteur électrique étant monté sur et connecté électriquement à la carte principale (15), et le logement (13) ayant un trou d'évitement (14), le connecteur électrique étant exposé à partir du trou d'évitement (14).

3. Terminal d'affichage (100) selon la revendication 1 ou 2, dans lequel le connecteur électrique comprend un connecteur mâle (20) ou un connecteur femelle (30),
lorsque le connecteur électrique comprend le connecteur mâle (20), le connecteur mâle (20) comprenant : une base (21), un connecteur de ligne HSD, et un connecteur de ligne CAN (25), le connecteur de ligne HSD et le connecteur de ligne CAN (25) étant montés sur un premier côté de la base (21) à distance l'un de l'autre ; et
lorsque le connecteur électrique comprend le connecteur femelle (30), le connecteur femelle (30) comprenant : un corps de base (31), une interface de ligne HSD, et une interface de ligne CAN (35), l'interface de ligne HSD et l'interface de ligne CAN (35) étant montées sur un premier côté du corps de base (31) espacées l'une de l'autre.

4. Terminal d'affichage (100) selon la revendication 3, dans lequel
lorsque le connecteur électrique comprend le connecteur mâle (20), le connecteur de ligne HSD comprend une bague de blindage (211) et une pluralité de broches de ligne HSD, la bague de blindage (211) étant manchonnée à l'extérieur des broches de ligne HSD ; et
lorsque le connecteur électrique comprend le connecteur femelle (30), l'interface de ligne HSD comprend un montant de blindage (311) disposé sur le corps de base (31) et une pluralité de broches de ligne HSD non connectées, une cavité étant prévue entre le montant de blindage (311) et le corps de base (31), et les broches de ligne HSD non connectées étant disposées sur le montant de blindage (311).

5. Terminal d'affichage (100) selon la revendication 4, dans lequel
lorsque le connecteur électrique comprend le connecteur mâle (20), un deuxième côté de la base est pourvu de broches de montage (29), les broches de montage (29) étant en correspondance un à un avec les broches de la ligne HSD et étant connectées électriquement à la carte principale (15) de l'écran d'affichage ; et
lorsque le connecteur électrique comprend le connecteur femelle (30), un second côté du corps de base (31) est muni de broches de montage (39), les broches de montage (39) étant en correspondance un à un avec les broches de ligne HSD non connectées et étant connectées électriquement à la carte principale (15) de l'écran d'affichage.

6. Terminal d'affichage (100) selon l'une quelconque des revendications 3 à 5, dans lequel
lorsque le connecteur électrique comprend le connecteur mâle (20), le connecteur de ligne HSD comprend au moins l'un d'un connecteur de signal différentiel basse tension (22), d'un connecteur d'image panoramique (23) et d'un connecteur USB (24) ; et
lorsque le connecteur électrique comprend le connecteur femelle (30), l'interface de ligne HSD comprend au moins l'une de l'interface de signal différentiel basse tension (32), de l'interface d'image panoramique (33) et de l'interface USB (34).

7. Terminal d'affichage (100) selon l'une quelconque des revendications 3 à 6, dans lequel
lorsque le connecteur électrique comprend le connecteur mâle (20), le connecteur de ligne HSD comprend le connecteur de signal différentiel basse tension (22), le connecteur d'image panoramique (23) et le connecteur USB (24) ; et
lorsque le connecteur électrique comprend le connecteur femelle (30), l'interface de ligne HSD comprend l'interface de signal différentiel basse tension (32), l'interface d'image panoramique (33) et l'interface USB (34).

8. Terminal d'affichage (100) selon la revendication 7, dans lequel
lorsque le connecteur électrique comprend le connecteur mâle (20), le connecteur de signal différentiel basse tension (22), le connecteur d'image panoramique (23) et le connecteur USB (24) sont disposés sur la base en forme de triangle, et le connecteur de ligne CAN (25) comprend une pluralité de broches de ligne CAN, certaines de la pluralité de broches de ligne CAN étant disposées entre le connecteur de signal différentiel basse tension (22) et le connecteur USB (24), et le reste de la pluralité de broches de ligne CAN étant disposé à une position opposée au connecteur de ligne HSD ; et
lorsque le connecteur électrique comprend le connecteur femelle (30), l'interface de signal différentiel basse tension (32), l'interface d'image panoramique (33) et l'interface USB (34) sont disposées sur le corps de base (31) en forme de triangle, et l'interface de ligne CAN (35) comprend une pluralité de broches de ligne CAN non connectées, certaines de la pluralité de broches de ligne CAN non connectées étant disposées entre l'interface de signal différentiel basse tension (32) et l'interface USB (34), et le reste de la pluralité de broches de ligne CAN non connectées étant disposées à une position opposée à l'interface de ligne HSD.

9. Véhicule (1000), comprenant :
le terminal d'affichage (100) selon l'une quelconque des revendications 1 à 8 ; et
un connecteur de faisceau de câblage connecté électriquement à une extrémité du véhicule et connecté électriquement au connecteur électrique.

10. Véhicule (1000) selon la revendication 9, dans lequel le terminal d'affichage (100) est monté de manière pivotante sur une carrosserie de véhicule par l'intermédiaire d'un mécanisme de rotation (4), le mécanisme de rotation (4) ayant une cavité creuse (42), le connecteur électrique étant disposé à l'opposé de la cavité creuse (42), et un faisceau de câblage (200) du connecteur de faisceau de câblage pénétrant à travers la cavité creuse (42).

11. Véhicule (1000) selon la revendication 9, dans lequel le terminal d'affichage (100) est configuré pour tourner autour d'un mécanisme de rotation (4) le long d'un plan sur lequel est situé un écran d'affichage, le mécanisme de rotation (4) comprenant un arbre rotatif (41), l'arbre rotatif ayant la cavité creuse (42).

12. Véhicule (1000), comprenant :
le terminal d'affichage (100) selon l'une quelconque des revendications 3 à 8 ; et
un connecteur de faisceau de câblage connecté électriquement à une extrémité du véhicule et connecté électriquement au connecteur électrique, dans lequel
le connecteur électrique comprend l'un d'un connecteur mâle (20) et d'un connecteur femelle (30), le connecteur de faisceau de câblage comprend l'autre du connecteur mâle (20) et du connecteur femelle (30), et la base (21) et le corps de base (31) ont une structure de connexion et une structure de positionnement qui sont mutuellement adaptées l'une à l'autre.

13. Véhicule (1000) selon la revendication 12, dans lequel la structure de connexion comprend une attache (26) disposée sur la base (21) et une position de fixation (36) disposée sur le corps de base (31), l'attache (26) étant adaptée pour être engagée avec la position de fixation (36).

14. Véhicule (1000) selon la revendication 12 ou 13, dans lequel la structure de positionnement comprend une pluralité de nervures de limitation (27) disposées sur la base (21) et une paroi périphérique (37) du corps de base (31), les nervures de limitation (27) étant disposées autour du connecteur de ligne HSD et du connecteur de ligne CAN (25), et les surfaces latérales intérieures des nervures de limitation (27) étant adaptées pour être fixées à la paroi périphérique (37) du corps de base (31).

15. Véhicule (1000) selon la revendication 12 ou 13, dans lequel la structure de positionnement comprend un montant de guidage (28) disposé sur la base et une rainure de guidage (38) disposée sur le corps de base (31).
